# EUROPEAN PATENT SPECIFICATION

(11) **EP 3 995 325 B1**
(45) Date of publication and mention of the grant of the patent: **29.05.2024**
(21) Application number: 20206254.3
(22) Date of filing: 06.11.2020
(51) Int. Cl.: B60C 11/11

(54) **TYRE**
REIFEN
PNEUMATIQUE

(43) Date of publication of application: 11.05.2022
(73) Proprietor: Bridgestone Europe NV/SA, 1930 Zaventem (BE)
(72) Inventor: Piscopo, Guido, 00128 Rome (IT)
(74) Representative: Marchetti, Alessio

(56) References cited:
- WO-A1-02/068222
- US-A- 1 946 367
- US-A- 2 479 958
- US-A- 4 279 283
- US-A- 4 723 585

## Description

The present invention relates to tyres, and particularly to tyres that have a tread pattern suitable for snowy conditions.

Various forms of tyre for snowy conditions are known, and one such form employs so-called T-points to generate snow compression as the snow flows through the tread pattern grooves. The T-points are formed where a first groove connects to a second groove extending at a right angle to the first groove to form a "T" shape in the tread plan view. When snow flowing along the first groove reaches the T-point it encounters the side wall of the second groove and is compressed, which completely or partly obstructs the flow of snow. The trapped snow forms a snow column which grips the snow on the road surface.

It has been found in computer simulations that the form of tyre employing T-points lacks some performance in snow compression, and actual tyres having the T-points do not excel on snows whose predominant traction, braking or handling contribution in snow comes from snow compression (i.e. soft or mid-hardness snow).

Another type of tyre for snow conditions is disclosed in US Patent Application Publication US2017/0036489A1. This tyre employs a zigzag circumferential groove with other grooves connecting to the zigzag circumferential groove. Attention is also drawn to the disclosure of US2479958A.

The present invention aims to mitigate at least one of the problems of the prior art.

The present invention provides a tyre as claimed in claim 1.

According to the present invention, in each of 5 or more of the grooves, the groove width where the groove meets the snow compression zone is at least 2.0 mm. When the groove width is less than 2.0mm, the groove may not allow sufficient snow to flow into the snow compression zone, which may lead to reduced snow compression and reduced snow performance. In the present invention, by providing this minimum groove width, sufficient snow flow into the snow compression zone can be achieved which increases snow trapping, and which contributes to improved snow performance of the tyre.

The present invention also provides that on at least one side of the snow compression zone in the tyre circumferential direction, none of the grooves converging in the snow compression zone runs parallel with the tyre circumferential direction. Without circumferential grooves on both sides of the snow compression zone in the tyre circumferential direction, the snow cannot slide so easily in the circumferential direction during traction or braking, and so is trapped and compressed more effectively. This helps to improve performance in traction and braking.

In addition, in the present invention, each virtual groove intersects with each of the other virtual grooves, and at least some of the groove axes extended into the snow compression zone intersect. Therefore, snow flowing out of each of the grooves is directed towards snow flowing out of each of the other grooves. This helps to increase snow compression.

Preferably, the tyre is a pneumatic tyre. Preferably, the grooves divide the tread into blocks. Preferably, the tyre is a passenger vehicle tyre. Preferably, the tyre is a snow tyre or an all-season tyre.

Preferably, in each of 5 or more of the grooves, the groove width where the groove meets the snow compression zone (the "groove starting width") is at least: 2.5 mm or 3.0 mm. It has been found in computer simulations that a groove starting width of about 3.4 mm gives good snow compression in both braking and traction. The groove starting width may be at least: 3.5 mm, 4.0 mm, 4.5 mm, 5.0 mm, 5.5 mm, 6.0 mm, 6.5 mm. The wider the groove, the more snow can flow into the snow compression zone.

The applicant also carried out snow testing on actual tyres which confirmed that a groove starting width of about 3.4 mm gives good snow compression in both braking and traction. This is referred to in more detail below.

Preferably, the groove starting width is at most 7.0 mm. If the groove starting width goes above 7.0 mm, the groove may become too large compared to the size of the snow compression zone, and snow compression may start to worsen.

The groove width at the other end of the groove from where the groove meets the snow compression zone (the "groove ending width") may be at least: 2.5 mm, 3.0 mm, 3.5 mm, 4.0 mm, 4.5 mm, 5.0 mm, 5.5 mm, 6.0 mm, 6.5 mm.

Preferably, the groove ending width is at most 7.0 mm. If the groove ending width goes above 7.0 mm, the groove may become too large compared to the size of the snow compression zone, and snow compression may start to worsen.

Preferably, in each of 5 or more of the grooves, the groove width is at least 2.0 mm at its narrowest point. Preferably, the groove width is at least: 2.5 mm or 3.0 mm. It has been found in computer simulations that such a groove width of about 3.4 mm gives good snow compression in both braking and traction. The groove width may be at least: 3.5 mm, 4.0 mm, 4.5 mm, 5.0 mm, 5.5 mm, 6.0 mm, 6.5 mm. Preferably, the groove width at its narrowest point is at most 7.0 mm. If the groove width at its narrowest point goes above 7.0 mm, the groove may become too large compared to the size of the snow compression zone, and snow compression may start to worsen.

Preferably, in each of 5 or more of the grooves, the ratio of the groove width where the groove meets the snow compression zone to the total length of the line defining the snow compression zone is at least 3%. This ratio provides a measure of the groove width to the size of the snow compression zone. When the ratio is at least 3%, the groove width is sufficiently large in comparison to the snow compression zone for a good amount of snow to flow into the snow compression zone, while providing that the snow compression zone is small enough to achieve snow compression. This combination helps to increase snow trapping and snow performance of the tyre.

Preferably, the ratio is at least: 5%, 7% or 9%. The ratio may be at least: 11%, 13%, 15%, 17% or 19%. The ratio is at most 20%.

Preferably, on at least one side of the snow compression zone in the tyre circumferential direction, none of the grooves converging in the snow compression zone runs parallel with the tyre circumferential direction. Without circumferential grooves on both sides of the snow compression zone in the tyre circumferential direction, the snow cannot slide so easily in the circumferential direction during traction or braking, and so is trapped and compressed more effectively. This helps to improve performance in traction and braking.

Preferably, on at least one side of the snow compression zone in the tyre circumferential direction, none of the grooves converging in the snow compression zone has a groove angle which is less than: 5°, 10°, 15°, 20° or 25° from the tyre circumferential direction. This improves snow trapping and helps to improve performance in traction and braking in comparison to, for instance, the tyre of US Patent Application Publication US2017/0036489A1 which has grooves 26 having a groove angle of less than 25° from the circumferential direction.

Similar improvements can be achieved in cornering. In particular, in one embodiment, on at least one side of the snow compression zone in the tyre width direction, none of the grooves converging in the snow compression zone runs parallel with the tyre width direction. In one embodiment, on at least one side of the snow compression zone in the tyre width direction, none of the grooves converging in the snow compression zone has a groove angle which is less than: 5°, 10°, 15°, 20° or 25° from the tyre width direction.

Preferably, in at least one, more preferably in at least 3, and even more preferably in each of the 5 or more of the grooves, a ratio of the area of the groove to the area of the snow compression zone is at least 1.0. By keeping the area of the groove larger than the area of the snow compression zone, the amount of snow compression can be made high. High snow compression helps to trap the snow more effectively and stops it sliding so easily in the grooves. This forms snow columns in the grooves which increase grip on the snow on the road surface. Preferably, the ratio is at least: 2 or 3. Preferably, the ratio is at most 4.

Preferably, in at least one, more preferably in at least 3, and even more preferably in each of the 5 or more of the grooves, a ratio of the volume of the groove to the volume of the snow compression zone is at least 0.8. Similarly as for the area, by keeping the volume ratio equal to or above 0.8, the amount of snow compression can be made high. Preferably, the ratio is at least: 1, 2 or 3. Preferably, the ratio is at most 4.

Preferably, when the groove axis of each of the 5 or more of the grooves is extended into the snow compression zone, each groove axis intersects with each of the other groove axes. According to this arrangement, snow flowing out of each of the grooves encounters, and is compressed by, snow flowing out of each of the other grooves. This helps to increase snow compression.

Preferably, each groove axis intersects with each of the other groove axes within the snow compression zone. With the groove axes intersecting within the snow compression zone, higher snow compression can be achieved.

Preferably, each groove axis intersects with each of the other groove axes at the same point within the snow compression zone. With this arrangement, the groove axes intersect at the same point within the snow compression zone. This means that the snow flowing out of the grooves all meets at the same point which leads to high snow compression at that point.

Preferably, at least one of the grooves has a groove angle of 30° or less from the tyre width direction. When such a groove is provided, the groove provides space for snow to flow into from the snow compression zone and become trapped, which can increase snow compression.

More preferably, , more preferably 10° or less, more preferably 5° or less, more preferably about 0° from the tyre width direction.

Preferably, two of the grooves have a groove angle of 30° or less from the tyre width direction. Preferably, the two grooves extend towards the snow compression zone from opposite sides of the tyre in the tyre width direction.

Preferably, in a tread plan view, each side wall of at least one of the grooves extends in a straight line from the groove end further from the snow compression zone to the groove end nearer the snow compression zone while the side walls converge. This means that the groove can smoothly compress the snow. Preferably, the side walls of each of the grooves extend in this way.

Preferably, in at least one of the grooves, the groove width at the groove end further from the snow compression zone is at least 1.1 times the groove width at the groove end nearer to the snow compression zone. Preferably, the ratio is at most 4 times. Preferably, the ratio is at least 1.2, 1.3, 1.4 or 1.5 times. Preferably, the ratio is at most 3.5, 3, 2.5, 2, 1.9, 1.8 or 1.7 times. It has been found in computer simulations that a ratio of about 1.7 times gives good snow compression in both braking and traction.

The snow compression zone may be located in the intermediate region or the centre region of the tread. Preferably, the snow compression zone is located in the centre region of the tread. During running of the tyre, snow is expelled from the footprint sides, being pushed out from the centre area. This suggests that having the snow compression zone in the intermediate or shoulder regions might work as well as the centre region. However, in this case the snow would be pushed out from grooves with more ease, especially from the grooves that end or extend beyond the footprint boundaries (e.g. shoulder grooves). For these reasons, it is preferable not to locate the snow compression zone in the shoulder region, but it is possible to locate the snow compression zone in the intermediate region or the centre region, and of the two it is preferable to locate it in the centre region. In this way, snow compression can be increased.

Preferably, the centre region is the region at the centre of the tread in the tyre width direction which includes the tyre equatorial plane; the shoulder regions are the regions next to the tread ends; and the intermediate regions are the regions between the shoulder regions and the centre region.

Preferably, each of the grooves converging in the snow compression zone connects the snow compression zone to another groove. Since each groove connects to another groove and does not terminate within a block, more snow can flow into the snow compression zone.

Each groove may extend between the snow compression zone and a respective other groove. In this way, each groove is fed by another respective groove, which can increase snow compression.

Preferably, in each of the grooves, the groove widths at the groove ends nearer the snow compression zone are equal to each other. This helps to equalise the amount of snow that can flow into the snow compression zone.

Preferably, in each of the grooves, the groove widths at the groove ends further from the snow compression zone are equal to each other. This helps to equalise the amount of snow flowing in each groove, which helps to equalise the snow compression when the snow flows in different directions.

In one preferred form, the angles between the groove axes of each adjacent pair of grooves are equal.

Preferably, each of the grooves converging in the snow compression zone has the same groove depth. This helps to equalise the amount of snow flowing in each groove, which helps to equalise the snow compression when the snow flows in different directions.

Preferably, there are 8 or fewer grooves which converge in the snow compression zone. If there are more than 8 grooves, the stiffness of the tread may be reduced excessively which can reduce grip on the road surface.

Preferably, there are 5 grooves which converge in the snow compression zone. Alternatively, there may be 6 or more grooves, 6 grooves, 7 or more grooves, 7 grooves or 8 grooves which converge in the snow compression zone.

Preferably, the arrangement of the grooves is symmetrical about the tyre width direction. With this arrangement, differences in snow performance in braking compared to traction can be minimised.

In one embodiment, the arrangement of the grooves is symmetrical about the tyre circumferential direction. With this arrangement, differences in snow performance in cornering can be minimised.

In one embodiment, each of the grooves converging in the snow compression zone has, in a tread plan view, a groove angle of 30° or more from the tyre circumferential direction.

In one embodiment, the tread has a second such snow compression zone. Preferably, one of the 5 or more grooves converging in the first snow compression zone is one of the 5 or more grooves converging in the second snow compression zone. Additional snow compression zones may be provided as required.

Embodiments of the invention will now be described, purely by way of example, with reference to the drawings in which:
Fig. 1 is a tread plan view of a portion of a tyre tread pattern of a tyre according to a first embodiment of the invention;
Fig. 2 is an enlarged tread plan view of the portion of the tyre tread pattern of Fig. 1;
Fig. 3 is another enlarged tread plan view of the portion of the tyre tread pattern of Fig. 1;
Figs. 4 (a) and (b) are tread plan views of portions of tyre tread patterns of tyres according to a second embodiment (a) and a third embodiment (b) of the invention;
Fig. 5 is a tread plan view of a portion of a tyre tread pattern of a tyre according to a fourth embodiment of the invention;
Figs. 6 (a) and (b) are tread plan views of portions of tyre tread patterns of tyres according to a fifth embodiment (a) and a sixth embodiment (b) of the invention;
Figs. 7 (a) and (b) are tread plan views of portions of tyre tread patterns of tyres according to a seventh embodiment (a) and an eighth embodiment (b) of the invention;
Fig. 8 is a tread plan view of a portion of a tyre tread pattern of a tyre according to a ninth embodiment of the invention;
Fig. 9 is a tread plan view of a portion of a prior art tyre tread pattern with "T-points";
Figs. 10 (a) and (b) are plots showing snow compression (fluid density) from results of simulations carried out on the portion of the tyre tread pattern of the first embodiment of the invention; and
Figs. 11 (a) and (b) are plots showing snow compression (fluid density) from results of simulations carried out on the prior art tyre tread pattern portion shown in Fig. 9.

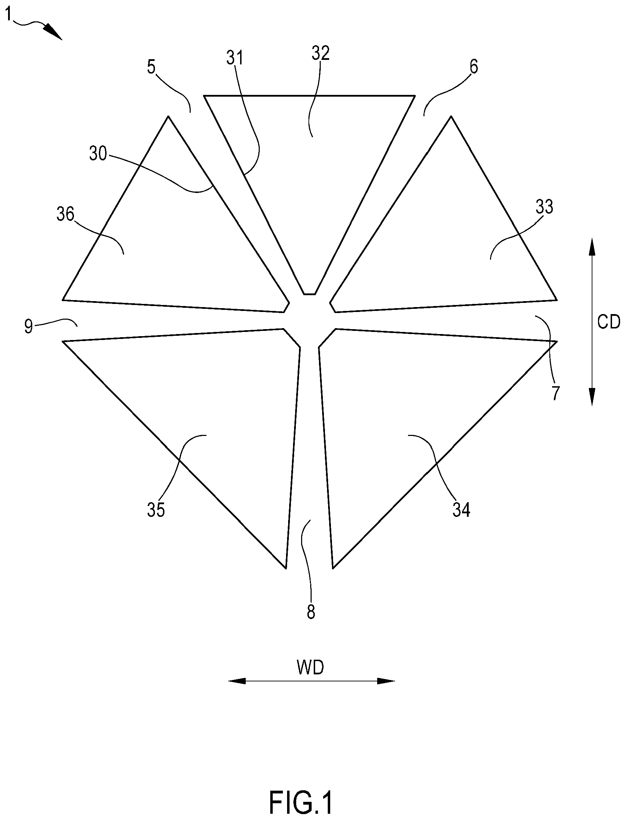

Referring to Figs. 1-3, a portion 1 of a tyre tread pattern of a tyre according to a first embodiment of the invention is shown in a tread plan view. The rest of the tyre and tread pattern is not shown in the drawings.

The portion 1 of the tread pattern has 5 grooves 5-9 which converge and connect with each other to form a snow compression zone (SCZ) 15 defined by a perimeter line 16 linking the points on the groove side walls where each groove 5-9 ends. In this embodiment, the snow compression zone 15 is formed at the centre of the portion 1 of the tread pattern, but this is not essential.

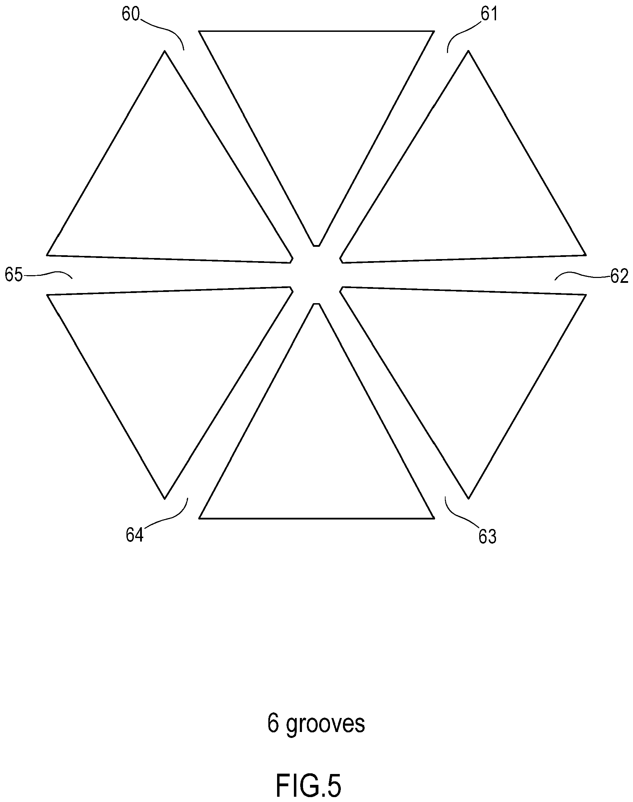

The portion 1 of the tread pattern also comprises generally triangular blocks 32-36. Each block 32-36 is located between a respective pair of adjacent converging grooves 5-9. In the first embodiment, each block 32-36 has a flattened corner nearest to the snow compression zone 15 which forms a short wall of the snow compression zone 15. However, the blocks do not need to have such walls, and for example the sixth embodiment (shown in Fig. 5(b)) does not have them.

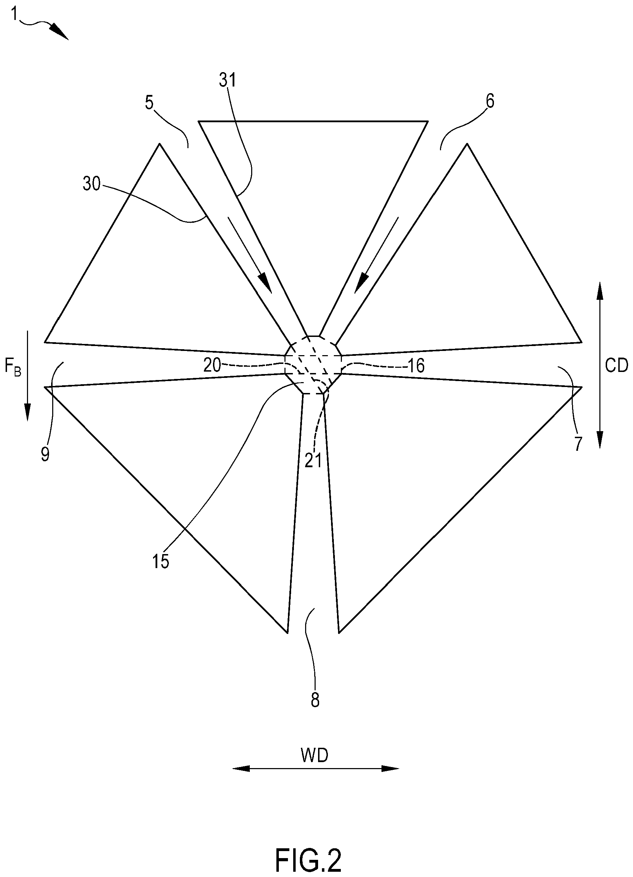

In Fig. 2, the direction of braking force is indicated arrow F_{B} (in a direction from the top of Fig. 2 to the bottom). The braking force F_{B} causes snow to flow in the grooves 5 and 6 during braking. Arrows in grooves 5 and 6 show the direction of snow flow. The snow flows along grooves 5 and 6 towards the snow compression zone 15 and is compressed in the snow compression zone 15. There will also be some snow compression in grooves 7 and 9 which are lateral grooves running parallel with the tyre width direction. Some of this compression will be from snow which was already in grooves 7 and 9 before braking started being compressed against the side walls of grooves 7 and 9, and some will be from snow which has flowed into grooves 7 and 9 from the snow compression zone 15 under the influence of snow flowing from grooves 5 and 6.

It should be noted that snow will also flow away from the snow compression zone 15 along groove 8 during braking.

In each of the 5 grooves, the groove width where the groove meets the snow compression zone 15 is at least 2.0 mm. By providing this minimum groove width, sufficient snow flow into the snow compression zone 15 can be achieved which increases snow trapping, and which contributes to improved snow performance of the tyre.

In each of the 5 grooves, a ratio of the area of the groove to the area of the snow compression zone is at least 1.0. By keeping the area of the groove larger than the area of the snow compression zone, the amount of snow compression can be made high. High snow compression helps to trap the snow more effectively and stops it sliding so easily in the grooves. This forms snow columns in the grooves which increase grip on the snow on the road surface.

Fig. 2 shows virtual grooves 20, 21 created by extending the groove side walls 30, 31 of grooves 5 and 7 into the snow compression zone 15 to the other side of the snow compression zone 15. When virtual grooves are created by extending the groove side walls of each of the 5 grooves into the snow compression zone 15 as far as the other side of the snow compression zone 15, each virtual groove intersects with each of the other virtual grooves. For simplicity, only two virtual grooves (virtual grooves 20 and 21) are shown in Fig. 2. This helps the snow flows from each groove to flow into each other in the snow compression zone, thereby increasing snow compression.

In Fig. 2 the side walls 30, 31 of groove 5 extend in a straight line from the groove end further from the snow compression zone 15 to the groove end nearer the snow compression zone 15 while the side walls 30, 31 converge. This helps to compress the snow smoothly as it flows towards the snow compression zone 15 during braking. In the first embodiment, each of the grooves is shaped in this way, but this is not essential and each groove may have, for example, parallel side walls.

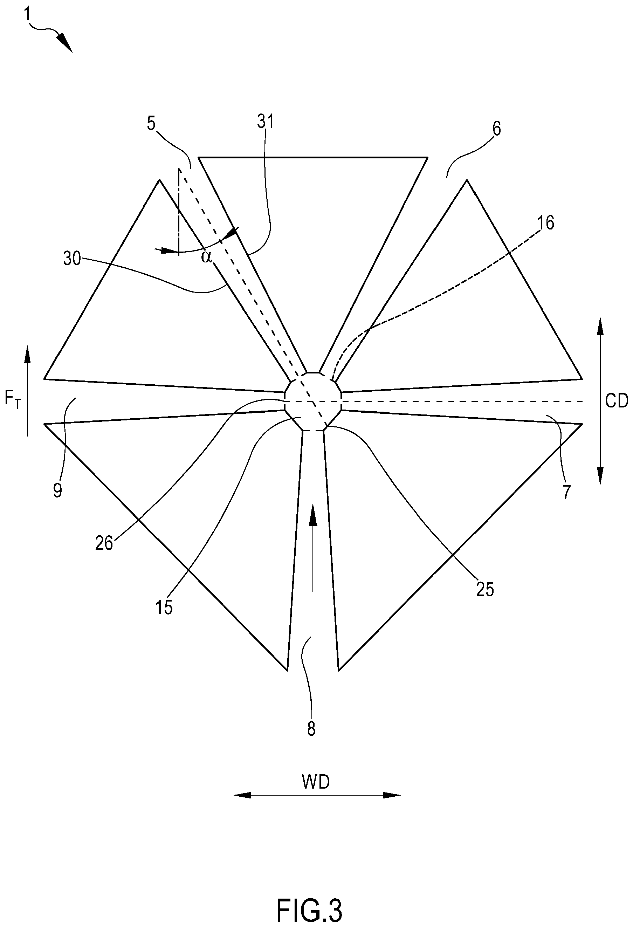

Fig. 3 shows what happens during traction when the direction of the force is reversed. In Fig. 3, the direction of traction force is indicated arrow F_{T} (in a direction from the bottom of Fig. 2 to the top). Arrow in groove 8 shows the direction of snow flow. This time the traction force F_{T} causes snow to flow along groove 8 towards the snow compression zone 15 which is compressed in the snow compression zone 15. Again, there will be some snow compression in lateral grooves 7 and 9.

In Fig. 3 longitudinal groove axis 25 of groove 5 is shown, and longitudinal groove axis 26 of groove 7 is shown. For simplicity, only two groove axes are shown in Fig. 3. Angle α is the groove angle of groove 5 with respect to the tyre circumferential direction CD. In the first embodiment, groove angle α is 30° from the tyre circumferential direction CD.

However, this is not essential. Groove 6 has the same groove angle from the tyre circumferential direction CD as groove 5, namely 30°. However, this is not essential. Groove 8 runs parallel with the tyre circumferential direction, and grooves 7 and 9 run parallel with the tyre width direction, but this is not essential and each of these grooves may have a different orientation.

In the first embodiment, there are 5 grooves and the angle between the groove axes of adjacent pair of grooves 5 and 9, 5 and 6 and 6 and 7 is equal (60°). Also, the angle between the groove axes of adjacent pair of grooves 7 and 8, and 8 and 9, is equal (90°). This helps to equalise snow compression in left versus right cornering. The angle between the groove axes of adjacent pair of grooves 7 and 8, and 8 and 9 could alternatively be more or less than 90°, for example 100° or 80°.

In the first embodiment, on one side in the tyre circumferential direction (the side at the top of Fig. 3), none of the grooves converging in the snow compression zone has a groove angle which is less than 30° from the tyre circumferential direction. If the portion 1 of the tread pattern had, on both sides in the tyre circumferential direction, grooves running parallel with or close to the tyre circumferential direction, braking and traction performance would be reduced because the snow could flow through the snow compression zone without being compressed so much. However, a groove running parallel with the tyre circumferential direction on only one side in the tyre circumferential direction can provide satisfactory performance because the snow may still become sufficiently compressed in the snow compression zone.

Fig. 3 shows the groove axes 25, 26 intersecting in the snow compression zone 15. In the first embodiment, although not shown in Fig. 3, each groove axis intersects with each of the other groove axes at the same point within the snow compression zone 15. This improves snow compression.

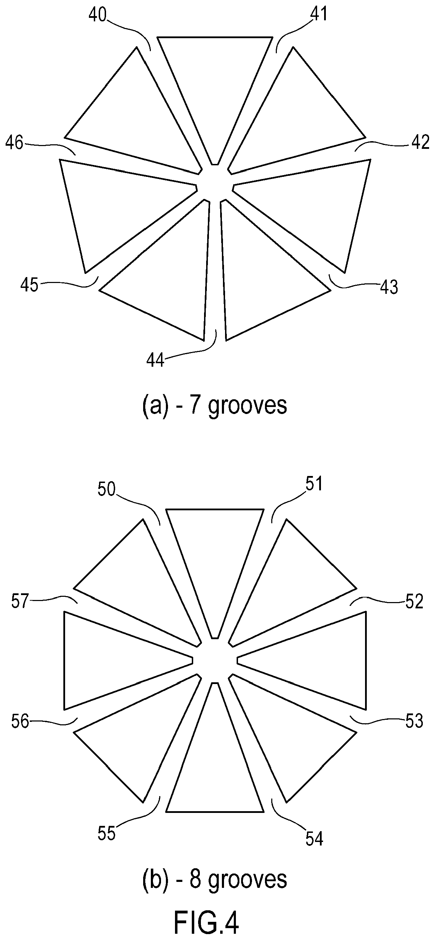

Fig. 4 shows portions of tyre tread patterns of tyres according to a second embodiment (a) and a third embodiment (b) of the invention. The second embodiment (a) has 7 grooves 40-46 and the third embodiment (b) has 8 grooves 50-57.

In the second embodiment, the lowest groove 44 runs parallel with the tyre circumferential direction CD, but the highest two grooves 40, 41 have groove angles of about 25° from the tyre circumferential direction CD. This provides satisfactory performance because the snow is still become sufficiently compressed in the snow compression zone. In the second embodiment, the angle between the groove axes of each adjacent pair of grooves is equal (about 51°).

The third embodiment (Fig. 4(b)) has 8 grooves 50-57. In the third embodiment, like the second embodiment, the angle between the groove axes of each adjacent pair of grooves is equal (45°).

Fig. 5 shows a portion of a tyre tread pattern of a tyre according to a fourth embodiment of the invention. The fourth embodiment has 6 grooves 60-65. In the fourth embodiment, like the second and third embodiments, the angle between the groove axes of each adjacent pair of grooves is equal (60°).

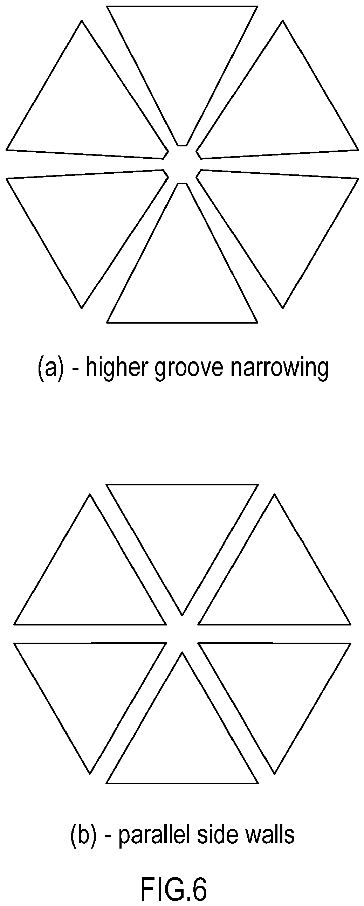

Fig. 6 shows portions of tyre tread patterns of tyres according to a fifth embodiment (a) and a sixth embodiment (b) of the invention. The fifth embodiment (a) is the same as the fourth embodiment except that there is a higher degree of narrowing of the sidewalls of each groove than in the fourth embodiment. This means that there are longer sections of wall between the ends of adjacent grooves in the snow compression zone than in the fourth embodiment.

The sixth embodiment (b) is the same as the fourth embodiment except that there is a no narrowing of the sidewalls of each groove. There are also no sections of wall between the ends of adjacent grooves in the snow compression zone.

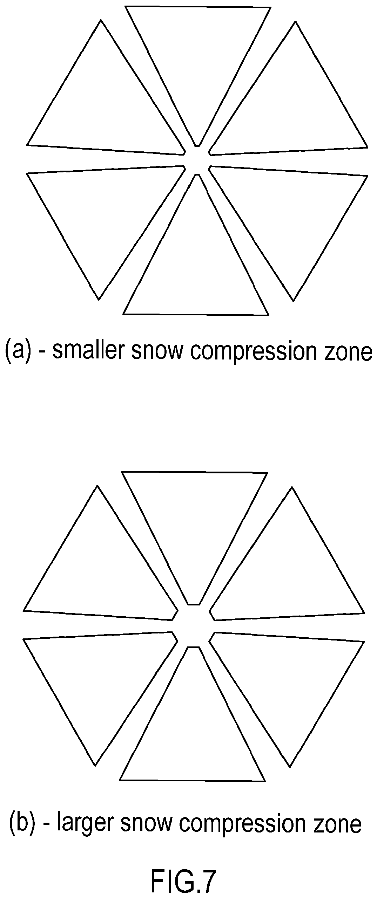

Fig. 7 shows portions of tyre tread patterns of tyres according to a seventh embodiment (a) and an eighth embodiment (b) of the invention. The seventh embodiment (a) is the same as the fourth embodiment except that i) there is a higher degree of narrowing of the sidewalls of each groove, and ii) the side walls of each groove have been extended so that the snow compression zone is smaller.

The eighth embodiment (b) is the same as the fourth embodiment except that i) there is a higher degree of narrowing of the sidewalls of each groove, and ii) the side walls of each groove have been shortened so that the snow compression zone is larger.

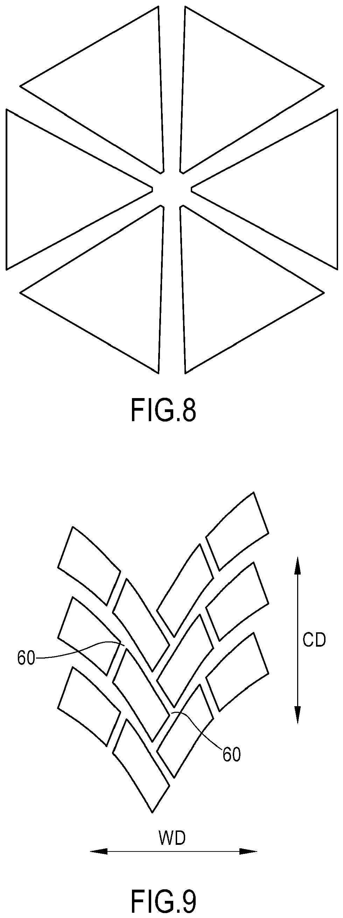

Fig. 8 shows a portion of a tyre tread pattern of a tyre according to an ninth embodiment of the invention. The ninth embodiment is the same as the fourth embodiment except that the portion of the tread pattern has been rotated by 90° about an axis normal to the surface of the tyre tread. This portion of the tread pattern provides improved snow compression in cornering where the tyre is subject to cornering force at an angle to the forces in braking and traction (which are parallel to the tyre circumferential direction). The direction of the cornering force under normal snow driving conditions is likely to be no more than 10-20° from the tyre circumferential direction. A cornering force of 90° will only occur under full lateral sliding when vehicle control usually has been lost. Nevertheless, using a tread pattern rotated by 90° as in the ninth embodiment helps in cornering and reduces the chance of total grip loss as the vehicle swerves.

Fig 9 shows a portion of a prior art tyre tread pattern with "T-points". The T-points 60 are where 3 grooves converge to form a "T" shape in a tread plan view. The invention provides improved snow compression in comparison to a T-point tread pattern.

Simulations on tyre models of size 195/65R15 were carried out to simulate the performance of the tyre models in braking and traction. The simulations used LS-Dyna (RTM) as the solver. The simulations were carried out on tyre models with the portions of the tread patterns of the fourth to eighth embodiments (which all have 6 grooves). The simulations were also carried out on the prior art tyre tread pattern with T-points shown in part in Fig. 9.

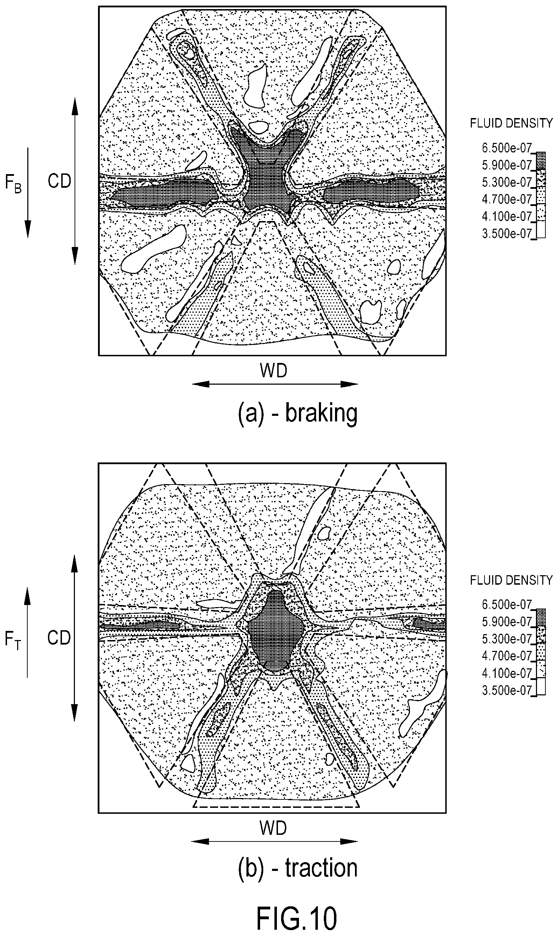

Figs. 10 (a) and (b) are plots taken from the results of the simulations carried out on the first embodiment. The plots show snow compression (fluid density) in different areas of the portion of the tread pattern. The darker the area, the higher the snow compression.

Fig. 10(a) shows snow compression during braking. It can be seen that the darkest areas (indicating high snow compression) are at the centre of the portion in the snow compression zone. There are also dark areas to the sides of the snow compression zone in the tyre width direction WD corresponding to grooves 62 and 65 in Fig. 5.

Fig. 10(b) shows snow compression during traction. Similarly to in Fig. 10(a), it can be seen in Fig. 10(b) that the darkest areas (indicating high snow compression) are at the centre of the portion in the snow compression zone. There are also dark areas to the sides of the snow compression zone in the tyre width direction WD corresponding to grooves 62 and 65 in Fig. 5.

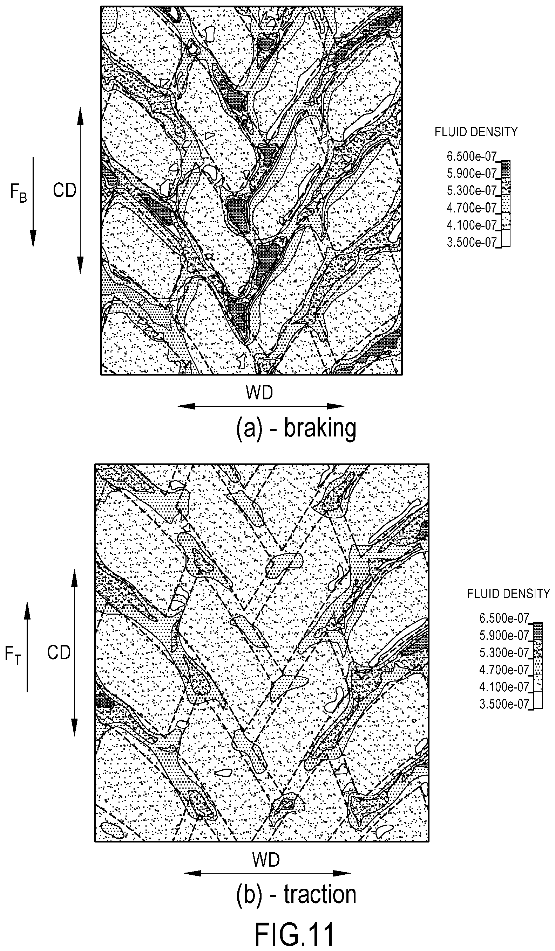

Figs. 11 (a) and (b) are plots taken from the results of the simulations carried out on the portion of the prior art tyre tread pattern with T-points shown in Fig. 9. The plots show snow compression (fluid density) in different areas of the portion of the tread pattern.

Fig. 11(a) shows snow compression during braking. There are dark areas (indicating high snow compression) in the areas corresponding to the grooves of the tread pattern. However, in comparison to Fig. 10(a), the area of high snow compression at any of the T-points in Fig. 11(a) is smaller than in the snow compression zone (in area A) in Fig. 10(a). This indicates that snow compression in braking is not as high in the prior art tread pattern.

Fig. 11(b) shows snow compression during traction. Similarly to in Fig. 11(a), in Fig. 11(b) there are dark areas (indicating high snow compression) in the areas corresponding to the grooves of the tread pattern. However, in comparison to Fig. 10(b), the area of high snow compression at any of the T-points in Fig. 11(b) is smaller than in the snow compression zone (in area C) in Fig. 10(b). This indicates that snow compression in traction is not as high in the prior art tread pattern.

**Table 1**

| Traction | |
|---|---|
| Tyre Model | Snow Compression |
| Reference T-point | 100% |
| 4^{th} Embodiment (Fig. 5) | 115% |
| 5^{th} Embodiment (Fig. 6(a)) | 114% |
| 6^{th} Embodiment (Fig. 6(b)) | 109% |
| 7^{th} Embodiment (Fig. 7(a)) | 115% |
| 8^{th} Embodiment (Fig. 7(b)) | 112% |

**Table 2**

| Braking | |
|---|---|
| Tyre Model | Snow Compression |
| Reference T-point | 100% |
| 4^{th} Embodiment (Fig. 5) | 120% |
| 5^{th} Embodiment (Fig. 6(a)) | 116% |
| 6^{th} Embodiment (Fig. 6(b)) | 120% |
| 7^{th} Embodiment (Fig. 7(a)) | 119% |
| 8^{th} Embodiment (Fig. 7(b)) | 121% |

Tables 1 and 2 give the results of the simulations for snow compression. In Tables 1 and 2, the snow compression force has been decoupled from the surface friction force to account for differences between the Reference T-point tread pattern and the portions of the tread patterns according to the fourth to eighth embodiments.

The results in Tables 1 and 2 show that each of the fourth to eighth embodiments gives improved snow compression in comparison to that of the Reference T-point model. However, the fourth embodiment is considered to give the best combination of improved snow compression in traction (115%) and in braking (120%).

**Table 3**

| | 4^{th} Embod. (Fig. 5) | 5^{th} Embod. (Fig. 6(a)) | 6^{th} Embod. (Fig. 6(b)) | 7^{th} Embod. (Fig. 7(a)) | 8^{th} Embod. (Fig. 7(b)) |
|---|---|---|---|---|---|
| Area of SCZ (mm²) | 51 | 55 | 46 | 33 | 77 |
| Groove width at end meeting SCZ (mm) | 3.4 | 2.6 | 4.2 | 2.5 | 2.7 |
| Groove width at other end (mm) | 5.7 | 6.5 | 4.2 | 6.5 | 6.5 |
| Groove length (mm) | 35 | 35 | 35 | 36 | 34 |
| Groove area (mm²) | 160 | 161 | 147 | 163 | 159 |

Table 3 gives geometric details for the embodiments involved in the simulations.

As referred to above, the applicant also carried out snow testing on actual tyres which confirmed that a groove starting width of about 3.4 mm gives good snow compression in both braking and traction. In particular, tests were performed on a Bridgestone A005 tyre with T-points and also tyres according to the present invention with grooves converging to form a snow compression zone. Three different tyres according to the present invention were tested. The tyres were of size 205/55R16.

Version 1 had a configuration of 6 converging grooves basically according to the seventh embodiment as shown in Fig. 7(a). Version 2 was the same as Version 1 but had some additional sipes added. In comparison to Version 2, Version 3 had slightly larger groove starting widths (3.4 mm vs 2.4 mm).

Each of Versions 1 to 3 had comparable (but slightly lower) total void areas and total void volumes in comparison to the Bridgestone A005, in order to provide a fair test. It should be borne in mind too that each of Versions 1 to 3 had sipes which would in some way influence the results as, unlike the simulations, it was not possible to decouple the effect of the sipes from the snow compression in the snow compression zone. The test for each different tread pattern was repeated at least 3 times to give an average (mean) value.

**Table 4**

| | Bridgestone A005 (T-point) | Version 1 | Version 2 | Version 3 |
|---|---|---|---|---|
| Snow Traction | 100 | 104 | 106 | 108 |
| Snow Braking | 100 | 103 | 104 | 105 |
| Snow Handling | 6.0 | 6.0 | 6.0 | 6.2 |

Table 4 gives the results of the snow testing on actual tyres.

As can be seen from Table 4, each of Versions 1 to 3 improved snow traction (by at least 4%) and braking (by at least 3%) in comparison to the T-point tyre.

Version 1 improved snow traction by 4% and braking by 3% in comparison to the T-point tyre.

Version 2 improved snow traction by 2% and braking by 1% in comparison to Version 1 because of the additional sipes.

Version 3 improved snow traction by 2%, braking by 1% and also handling in comparison to Version 2 because of the slightly wider groove starting widths (3.4 mm vs 2.4 mm). It should be noted that in Version 3 the length of the "walls" between adjacent grooves in the snow compression zone was kept the same but the size of the snow compression zone was increased slightly in comparison to Version 2. In addition, the grooves were not widened along their whole length, but only about half the groove was widened in order not to vary the total void areas and volumes too much, so as to avoid an unfair comparison between Versions 1 to 3 and the T-point tyre. "Handling" was a subjective evaluation score given by the driver of the vehicle.

In addition to the snow testing described above with reference to Table 4, the applicant also carried out snow testing on actual tyres without sipes. The tested tyres were a T-point tyre and a tyre (Version 4) according to the 5^{th} embodiment of the invention. The tyres were of size 195/65R15.

Version 4 had a configuration of 6 converging grooves according to the 5^{th} embodiment as shown in Fig. 6(a). Both the T-point tyre and the Version 4 tyre were hand cut and featured the same tread compound, total void areas, total void volumes and contact area distribution in the tread (centre region vs shoulder region).

**Table 5**

| | T-point | | 5^{th} Embodiment. (Fig. 6(a)) | |
|---|---|---|---|---|
| | Simulation | Actual Tyre | Simulation | Actual Tyre |
| Snow Traction | 100% | 100% | 128% | 106% |
| Snow Braking | 100% | 100% | 128% | 101% |
| Snow Handling | - | 5.0 | - | 5.9 |

Table 5 gives the results of the snow testing on actual tyres.

The snow traction test and the snow braking test were each repeated three times on two different surfaces to give an average (mean) value. The snow handling test was repeated twice on two different surfaces to give an average (mean) value.

The results in Table 5 show that the simulation of the tyre according to the 5^{th} embodiment shows a 28% improvement in both snow traction and snow braking, in comparison to the T-point tyre. On the other hand, the results for the actual tyres show an improvement of 6% in snow traction, 1% in snow braking and also an improvement in snow handling. Snow handling was a subjective evaluation score given by the driver of the vehicle. Although the results for the actual tyres show a lesser improvement in performance than in the simulation results, there is nevertheless an improvement in each of the three measures of performance. These results are useful to show the improvement in performance without the influence of sipes.

Embodiments of the present invention have been described above by way of example. However, the present invention is not necessarily limited to the features of the embodiments described but only by the appended claims.

## Claims

1. A tyre comprising a tread, wherein in a tread plan view:
the tread has 5 or more grooves (5-9) which converge and connect with each other to form a snow compression zone (15) defined by a line (16) linking the points where adjacent grooves (5-9) meet;
on at least one side of the snow compression zone (15) in the tyre circumferential direction (CD), none of the grooves (5-9) converging in the snow compression zone (15) runs parallel with the tyre circumferential direction (CD);
in each of 5 or more of the grooves (5-9), the groove width where the groove (5-9) meets the snow compression zone (15) is at least 2.0 mm;
when virtual grooves (20, 21) are created by extending the groove side walls (30, 31) of each of the 5 or more of the grooves (5-9) into the snow compression zone (15), each virtual groove (20, 21) intersects with each of the other virtual grooves (21, 20); and
when the groove axis (25, 26) of each of the 5 or more of the grooves (5-9) is extended into the snow compression zone (15) as far as the other side of the snow compression zone (15), at least 4 of the groove axes (25, 26) intersect with at least 2 of the other groove axes (26, 25), **characterized in that**
in each of 5 or more of the grooves (5-9), the ratio of the groove width where the groove (5-9) meets the snow compression zone (15) to the total length of the line (16) defining the snow compression zone (15) is at most 20%.

2. A tyre according to claim 1, wherein, in each of 5 or more of the grooves (5-9), the groove width where the groove (5-9) meets the snow compression zone (15) is at least 3.0 mm.

3. A tyre according to claim 1 or 2, wherein, in each of 5 or more of the grooves (5-9), the ratio of the groove width where the groove (5-9) meets the snow compression zone (15) to the total length of the line (16) defining the snow compression zone (15) is at least 3%.

4. A tyre according to claim 1, 2 or 3, wherein, in each of 5 or more of the grooves (5-9), the ratio of the groove width where the groove (5-9) meets the snow compression zone (15) to the total length of the line (16) defining the snow compression zone (15) is at least 7%.

5. A tyre according to any preceding claim, wherein, on at least one side of the snow compression zone (15) in the tyre circumferential direction (CD), none of the grooves (5-9) converging in the snow compression zone (15) has a groove angle which is 5° or less from the tyre circumferential direction (CD).

6. A tyre according to any preceding claim, wherein, on at least one side of the snow compression zone (15) in the tyre circumferential direction (CD), none of the grooves (5-9) converging in the snow compression zone (15) has a groove angle which is 25° or less from the tyre circumferential direction (CD).

7. A tyre according to any preceding claim, wherein, when the groove axis (25, 26) of each of the 5 or more of the grooves (5-9) is extended into the snow compression zone (15), each groove axis (25, 26) intersects with each of the other groove axes (26, 25).

8. A tyre according to claim 7, wherein each groove axis (25, 26) intersects with each of the other groove axes (26, 25) at the same point within the snow compression zone (15).

9. A tyre according to any preceding claim, wherein, in a tread plan view, each side wall (30, 31) of at least one of the grooves (5) extends in a straight line from the groove end further from the snow compression zone (15) to the groove end nearer the snow compression zone (15) while the side walls (30, 31) converge.

10. A tyre according to any preceding claim, wherein the snow compression zone (15) is on the tyre equatorial plane.

11. A tyre according to any preceding claim, wherein each of the grooves (5-9) converging in the snow compression zone (15) connects the snow compression zone (15) to another groove.

12. A tyre according to any preceding claim, wherein, for each of the grooves (5-9), the groove widths at the groove ends nearer the snow compression zone (15) are equal to each other.

13. A tyre according to any preceding claim, wherein the angles between the groove axes of each adjacent pair of grooves are equal.

14. A tyre according to any preceding claim, wherein each of the grooves (5-9) converging in the snow compression zone (15) has the same groove depth.

15. A tyre according to any preceding claim, wherein each of the grooves converging in the snow compression zone has, in a tread plan view, a groove angle of 30° or more from the tyre circumferential direction.

## Patentansprüche

1. Reifen, umfassend eine Lauffläche, wobei in einer Laufflächendraufsicht:
die Lauffläche 5 oder mehr Rillen (5-9) aufweist, die konvergieren und sich miteinander verbinden, um eine Schneekompressionszone (15) auszubilden, die durch eine Linie (16) definiert ist, die die Punkte verbindet, an denen benachbarte Rillen (5-9) aufeinandertreffen;
auf mindestens einer Seite der Schneekompressionszone (15) in der Reifenumfangsrichtung (CD) keine der Rillen (5-9), die in der Schneekompressionszone (15) konvergieren, parallel zu der Reifenumfangsrichtung (CD) verläuft;
in jeder von 5 oder mehr der Rillen (5-9) die Rillenbreite, in der die Rille (5-9) auf die Schneekompressionszone (15) trifft, mindestens 2,0 mm beträgt;
wenn virtuelle Rillen (20, 21) erzeugt werden, durch Verlängern der Rillenseitenwände (30, 31) von jeder der 5 oder mehr der Rillen (5-9) in die Schneekompressionszone (15), sich jede virtuelle Rille (20, 21) mit jeder der anderen virtuellen Rillen (21, 20) schneidet; und
wenn die Rillenachse (25, 26) von jeder der 5 oder mehr der Rillen (5-9) in die Schneekompressionszone (15) bis zu der anderen Seite der Schneekompressionszone (15) verlängert ist, sich mindestens 4 der Rillenachsen (25, 26) mit mindestens 2 der anderen Rillenachsen (26, 25) schneiden, **dadurch gekennzeichnet, dass**
in jeder von 5 oder mehr der Rillen (5-9) das Verhältnis der Rillenbreite, in der die Rille (5-9) auf die Schneekompressionszone (15) trifft, zu der Gesamtlänge der Linie (16), die die Schneekompressionszone (15) definiert, höchstens 20 % beträgt.

2. Reifen nach Anspruch 1, wobei in jeweils 5 oder mehr der Rillen (5-9) die Rillenbreite, in der die Rille (5-9) auf die Schneekompressionszone (15) trifft, mindestens 3,0 mm beträgt.

3. Reifen nach Anspruch 1 oder 2, wobei in jeder von 5 oder mehr der Rillen (5-9) das Verhältnis der Rillenbreite, in der die Rille (5-9) auf die Schneekompressionszone (15) trifft, zu der Gesamtlänge der Linie (16), die die Schneekompressionszone (15) definiert, mindestens 3 % beträgt.

4. Reifen nach Anspruch 1, 2 oder 3, wobei in jeder von 5 oder mehr der Rillen (5-9) das Verhältnis der Rillenbreite, in der die Rille (5-9) auf die Schneekompressionszone (15) trifft, zu der Gesamtlänge der Linie (16), die die Schneekompressionszone (15) definiert, mindestens 7 % beträgt.

5. Reifen nach einem der vorstehenden Ansprüche, wobei auf mindestens einer Seite der Schneekompressionszone (15) in der Reifenumfangsrichtung (CD) keine der Rillen (5-9), die in der Schneekompressionszone (15) konvergieren, einen Rillenwinkel aufweist, der 5° oder weniger von der Reifenumfangsrichtung (CD) beträgt.

6. Reifen nach einem der vorstehenden Ansprüche, wobei auf mindestens einer Seite der Schneekompressionszone (15) in der Reifenumfangsrichtung (CD) keine der Rillen (5-9), die in der Schneekompressionszone (15) konvergieren, einen Rillenwinkel aufweist, der 25° oder weniger von der Reifenumfangsrichtung (CD) beträgt.

7. Reifen nach einem der vorstehenden Ansprüche, wobei, wenn die Rillenachse (25, 26) von jeder der 5 oder mehr der Rillen (5-9) in die Schneekompressionszone (15) verlängert ist, sich jede Rillenachse (25, 26) mit jeder der anderen Rillenachsen (26, 25) schneidet.

8. Reifen nach Anspruch 7, wobei sich jede Rillenachse (25, 26) mit jeder der anderen Rillenachsen (26, 25) an demselben Punkt innerhalb der Schneekompressionszone (15) schneidet.

9. Reifen nach einem der vorstehenden Ansprüche, wobei sich in einer Laufflächendraufsicht jede Seitenwand (30, 31) von mindestens einer der Rillen (5) in einer geraden Linie von dem Rillenende weiter von der Schneekompressionszone (15) zu dem Rillenende erstreckt, das näher an der Schneekompressionszone (15) liegt, während die Seitenwände (30, 31) konvergieren.

10. Reifen nach einem der vorstehenden Ansprüche, wobei die Schneekompressionszone (15) auf der Reifenäquatorebene liegt.

11. Reifen nach einem der vorstehenden Ansprüche, wobei jede der Rillen (5-9), die in der Schneekompressionszone (15) konvergieren, die Schneekompressionszone (15) mit einer anderen Rille verbindet.

12. Reifen nach einem der vorstehenden Ansprüche, wobei für jede der Rillen (5-9) die Rillenbreiten an den Rillenenden, die näher an der Schneekompressionszone (15) sind, gleich zueinander sind.

13. Reifen nach einem der vorstehenden Ansprüche, wobei die Winkel zwischen den Rillenachsen jedes benachbarten Paares von Rillen gleich sind.

14. Reifen nach einem der vorstehenden Ansprüche, wobei jede der Rillen (5-9), die in der Schneekompressionszone (15) konvergieren, die gleiche Rillentiefe aufweist.

15. Reifen nach einem der vorstehenden Ansprüche, wobei jede der Rillen, die in der Schneekompressionszone konvergieren, in einer Laufflächendraufsicht einen Rillenwinkel von 30° oder mehr von der Reifenumfangsrichtung aufweist.

## Revendications

1. Pneumatique comprenant une bande de roulement, dans lequel dans une vue en plan de bande de roulement :
la bande de roulement a 5 rainures (5 à 9) ou plus qui convergent et se relient entre elles pour former une zone de compression de neige (15) définie par une ligne (16) liant les points où des rainures (5 à 9) adjacentes se rencontrent ;
sur au moins un côté de la zone de compression de neige (15) dans la direction circonférentielle (CD) de pneumatique, aucune des rainures (5 à 9) convergeant dans la zone de compression de neige (15) ne s'étend parallèlement à la direction circonférentielle (CD) de pneumatique ;
dans chacune des 5 rainures (5 à 9) ou plus, la largeur de rainure où la rainure (5 à 9) rencontre la zone de compression de neige (15) est d'au moins 2,0 mm ;
lorsque des rainures virtuelles (20, 21) sont créées en étendant les parois latérales de rainure (30, 31) de chacune des 5 rainures (5 à 9) ou plus dans la zone de compression de neige (15), chaque rainure virtuelle (20, 21) se croise avec chacune des autres rainures virtuelles (21, 20) ; et
lorsque l'axe de rainure (25, 26) de chacune des 5 rainures (5 à 9) ou plus est étendu dans la zone de compression de neige (15) jusqu'à l'autre côté de la zone de compression de neige (15), au moins 4 des axes de rainure (25, 26) se croisent avec au moins 2 des autres axes de rainure (26, 25), **caractérisé en ce que**
dans chacune des 5 rainures (5 à 9) ou plus, le rapport de la largeur de rainure où la rainure (5 à 9) rencontre la zone de compression de neige (15) à la longueur totale de la ligne (16) définissant la zone de compression de neige (15) est d'au plus 20 %.

2. Pneumatique selon la revendication 1, dans lequel, dans chacune des 5 rainures (5 à 9) ou plus, la largeur de rainure où la rainure (5 à 9) rencontre la zone de compression de neige (15) est d'au moins 3,0 mm.

3. Pneumatique selon la revendication 1 ou 2, dans lequel, dans chacune des 5 rainures (5 à 9) ou plus, le rapport de la largeur de rainure où la rainure (5 à 9) rencontre la zone de compression de neige (15) à la longueur totale de la ligne (16) définissant la zone de compression de neige (15) est d'au moins 3 %.

4. Pneumatique selon la revendication 1, 2 ou 3, dans lequel, dans chacune des 5 rainures (5 à 9) ou plus, le rapport de la largeur de rainure où la rainure (5 à 9) rencontre la zone de compression de neige (15) à la longueur totale de la ligne (16) définissant la zone de compression de neige (15) est d'au moins 7 %.

5. Pneumatique selon l'une quelconque des revendications précédentes, dans lequel, sur au moins un côté de la zone de compression de neige (15) dans la direction circonférentielle (CD) de pneumatique, aucune des rainures (5 à 9) convergeant dans la zone de compression de neige (15) n'a un angle de rainure qui est inférieur ou égal à 5° par rapport à la direction circonférentielle (CD) de pneumatique.

6. Pneumatique selon l'une quelconque des revendications précédentes, dans lequel, sur au moins un côté de la zone de compression de neige (15) dans la direction circonférentielle (CD) de pneumatique, aucune des rainures (5 à 9) convergeant dans la zone de compression de neige (15) n'a un angle de rainure qui est inférieur ou égal à 25° par rapport à la direction circonférentielle (CD) de pneumatique.

7. Pneumatique selon l'une quelconque des revendications précédentes, dans lequel, lorsque l'axe de rainure (25, 26) de chacune des 5 rainures (5 à 9) ou plus est étendu dans la zone de compression de neige (15), chaque axe de rainure (25, 26) se croise avec chacun des autres axes de rainure (26, 25).

8. Pneumatique selon la revendication 7, dans lequel chaque axe de rainure (25, 26) se croise avec chacun des autres axes de rainure (26, 25) au niveau du même point à l'intérieur de la zone de compression de neige (15).

9. Pneumatique selon l'une quelconque des revendications précédentes, dans lequel, dans une vue en plan de bande de roulement, chaque paroi latérale (30, 31) d'au moins l'une des rainures (5) s'étend en une ligne droite depuis l'extrémité de rainure plus éloignée de la zone de compression de neige (15) jusqu'à l'extrémité de rainure plus proche de la zone de compression de neige (15) tandis que les parois latérales (30, 31) convergent.

10. Pneumatique selon l'une quelconque des revendications précédentes, dans lequel la zone de compression de neige (15) est sur le plan équatorial du pneumatique.

11. Pneumatique selon l'une quelconque des revendications précédentes, dans lequel chacune des rainures (5 à 9) convergeant dans la zone de compression de neige (15) relie la zone de compression de neige (15) à une autre rainure.

12. Pneumatique selon l'une quelconque des revendications précédentes, dans lequel, pour chacune des rainures (5 à 9), les largeurs de rainure au niveau des extrémités de rainure plus proches de la zone de compression de neige (15) sont égales entre elles.

13. Pneumatique selon l'une quelconque des revendications précédentes, dans lequel les angles entre les axes de rainure de chaque paire adjacente de rainures sont égaux.

14. Pneumatique selon l'une quelconque des revendications précédentes, dans lequel chacune des rainures (5 à 9) convergeant dans la zone de compression de neige (15) a la même profondeur de rainure.

15. Pneumatique selon l'une quelconque des revendications précédentes, dans lequel chacune des rainures convergeant dans la zone de compression de neige a, dans une vue en plan de bande de roulement, un angle de rainure de 30° ou plus par rapport à la direction circonférentielle de pneumatique.
